# EUROPÄISCHE PATENTANMELDUNG

(11) **EP 2 363 601 A2**
(43) Veröffentlichungstag der Anmeldung: **07.09.2011**
(21) Anmeldenummer: 11156754.1
(22) Anmeldetag: 03.03.2011
(51) Int. Cl.: F03D 1/06, F03D 11/00

(54) **Rotornabe in Faserverbundbauweise für Windkraftanlagen**

(30) Priorität: 04.03.2010 DE 102010010283
(71) Anmelder: Deutsches Zentrum für Luft- und Raumfahrt e.V., 51147 Köln (DE)
(72) Erfinder: Fink, Axel, Dipl.-Ing., 38104, Braunschweig (DE); Assing, Heiko, Dipl.-Ing., 38110, Braunschweig (DE); Hühne, Christian, Dr.-Ing., 38104, Braunschweig (DE); Niemann, Steffen, Dipl.-Ing., 38440, Wolfsburg (DE); Röstermundt, Dirk, Dipl.-Ing., 31224, Peine (DE)
(74) Vertreter: Einsel, Martin

(57) **Zusammenfassung**

Eine Rotornabe für Windkraftanlagen besitzt eine drehbare Welle aus Faserverbundwerkstoff. Mehrere Rotorblätter sind mit einer mittelbaren Verbindung mit der Welle verbunden. Zu jedem einzelnen Rotorblatt ist ein einzelner Anschlusskörper **aus Faserverbundwerkstoff vorgesehen. Dieser** Anschlusskörper ist mit dem ihm zugeordneten Rotorblatt einerseits und mit der Welle andererseits verbunden. Die einzelnen Anschlusskörper sind untereinander nicht direkt verbunden.

## Beschreibung

Die Erfindung betrifft eine Rotornabe für Windkraftanlagen, mit einer drehbaren Welle aus Faserverbundwerkstoff, mit mehreren Rotorblättern, und mit einer mittelbaren Verbindung der Welle zu den Rotorblättern.

Windkraftanlagen besitzen einen Rotor mit einer Nabe und mehreren an der Nabe angeschlossenen Rotorblättern. Bei modernen Windkraftanlagen handelt es sich meist um drei Rotorblätter an einer Rotornabe.

Die Rotornabe stellt eines der höchst belasteten Bauteile moderner Windkraftanlagen dar. Dort werden die Rotorblattlasten zusammengeführt und in eine zugehörige Welle eingeleitet.

Das Biegemoment um die Rotordrehachse in Schwenkrichtung entsteht dabei aus den aerodynamischen Lasten und der Gewichtskraft der drei Rotorblätter. Es zeichnet sich durch einen hohen ungünstigen Biegewechselanteil aus. Hinzu kommt das Biegemoment in Schlagrichtung des sich drehenden Rotors. Darüber hinaus sind das Torsionsmoment jedes Rotorblattes, das jeweils aus den aerodynamischen Lasten entsteht, sowie die Zentrifugalkräfte als Ergebnis der Blattrotation zu berücksichtigen. Alle diese Momente werden in der Rotornabe gesammelt. Von dort werden diese Belastungen über einen einzigen Anschluss an die Antriebswelle weitergeleitet.

Damit geht ein komplexer mehrachsiger Spannungszustand einher. Aufgrund dieser erheblichen und komplexen Belastungen werden Rotornaben üblicherweise in Stahlbauweise ausgeführt.

Rotornaben konzentrieren somit die gesamten Kräfte und Momente der meist drei Rotorblätter auf engstem Raum und leiten diese dann weiter in die Antriebswelle. Dabei dient ein Anteil der Wellenlast, nämlich das Torsionsmoment der Welle, den Generatorantrieb. Die weiteren Anteile werden als Querkräfte in den Lagerungen der Rotorwelle im Turm des Windkraftwerks abgesetzt.

Rotornaben stellen daher angesichts des extremen mehrachsigen und wechselnden Spannungszustandes besonders ermüdungskritische Bauteile dar. Daher werden besonders hohe Anforderungen an die Wahl des Werkstoffes für die Rotornabe und auch an die geometrische Ausführung gestellt. Der nahezu gesamte bisherige Stand der Technik und praktisch alle aktuellen Ausführungen von Rotornaben stützen sich auf eine gegossene Konstruktion aus Stahl mit möglichst weichen geometrischen Übergängen. Die Fachwelt geht davon aus, dass nur so lokale Spannungsüberhöhungen vermieden werden und die weiteren Anforderungen erfüllt werden können. Die Stahlgusskonstruktion ermöglicht auf einfache Weise eine lokale Adaption der Wanddicke gemäß den Beanspruchungszustand. Typische Ausführungsformen werden etwa von Erich Hau, "Windkraftanlagen. Grundlagen, Technik, Einsatz, Wirtschaftlichkeit", vierte Auflage 2008, angegeben.

Nahezu alle bekannten und in diesem Werk auch erläuterten Ausführungsformen der zumeist eingesetzten Anlagen mit drei Rotorblättern stellen eine Knotenstruktur mit vier kreisförmigen Anschlussflanschen dar. An den Anschlussflanschen werden die drei Rotorblätter oder gegebenenfalls zwischengeschaltete Extensionselemente einerseits und die Antriebswelle andererseits angeflanscht. Die Flanschgeometrie ist üblicherweise kreisförmig.

Die durch die Stahlbauweise erzielte Stabilität und Belastbarkeit wird jedoch begleitet durch ein sehr hohes Gewicht des Bauteils. Da das entsprechende Bauteil bei modernen Windkraftanlagen auch in entsprechender Höhe angeordnet wird, wirkt dieses sehr hohe Gewicht als Belastung für die entsprechende Konstruktion der gesamten Windkraftanlage und ist somit außerordentlich nachteilig.

Neben diesem sehr hohen Gewicht sind weitere Nachteile auch die hohe Anforderung an die Qualität des metallischen Werkstoffs aufgrund der strukturmechanischen Anforderungen hinsichtlich der Dauerfestigkeit und Steifigkeit. Zu beachten ist auch, dass die Rotornaben in erheblichen Maße Umwelteinflüssen ausgesetzt sind, die sich darüber hinaus witterungsbedingt ständig ändern. Die Rotornaben rotieren und müssen gleichzeitig wechselnde Windgeschwindigkeiten und etwa auch Böen aushalten können. Zusätzlich ist die Korrosionsproblematik zu beachten.

Werden wie häufig üblich gegossene Rotornaben aus Stahlguss eingesetzt, sind auch relativ hohe Produktionskosten zu berücksichtigen, insbesondere für die erforderlichen Gussformen. Erst bei größeren Stückzahlen ergibt sich die Möglichkeit einer wirtschaftlichen Fertigung im Stahlgussverfahren.

Ein typisches Beispiel für eine Rotorblattnabe aus Gusseisen ist in der DE 100 34 958 A1 beschrieben. Hier wird auch darauf hingewiesen, dass die immer größer werdenden Abmessungen die Anforderungen an die Gussteile immer weiter steigern, da die Gefahr etwa von Schwachstellen in Form von Lunkern ebenfalls ansteigt. Zusätzlich werden durch die immer größer und immer schwerer werdenden Rotorblattnaben auch Transportprobleme hervorgerufen. Es wird dort zur Behebung dieser Probleme eine Fertigung aus mehreren Metallbauteilen und ein separater Transport dieser Metallbauteile vorgeschlagen.

Auch neueste Fachbücher auf diesem Gebiet, beispielsweise Erich Hau, Windkraftanlagen, 4. Auflage (2008), Seiten 287 bis 294, schlagen für den Aufbau einer Rotornabe für Windkraftanlagen Stahlgussnaben anstelle früher üblicher geschweißter Stahlblechkonstruktionen und sehr teurer Schmiedeteile vor. Stahlgussnaben haben sich allgemein durchgesetzt, auf die hohen Kosten für die notwendigen Gussformen wird jedoch auch hier ausdrücklich hingewiesen.

In theoretischen Studien ist daher zur Vermeidung der zahlreichen Nachteile von Rotornaben in Stahlbauweise gelegentlich vorgeschlagen worden, Rotornaben stattdessen in Faserverbundweise herzustellen. Dies würde einerseits eine Verringerung des Strukturgewichts der Nabe ermöglichen und andererseits einen Ansatz zur Reduzierung der Produktionskosten darstellen.

Für Rotorblätter, die außen an der Rotornabe befestigt werden sollen, findet sich ein Vorschlag zur Verwendung von Faserverbundwerkstoffen spezieller Art bereits in der DE 197 33 372 C1.

In der WO 01/42647 A2 wird ein Rotor für eine Windturbine beschrieben, der eine Rotornabe besitzt, an welcher außen an einer Schale drei gleichmäßig beabstandete Rotorblätter angeschlossen sind. Die Schale ist in der Rotordrehebene zweigeteilt. Die Rotornabe besitzt eine Durchbohrung, durch welche eine Generatorwelle ragen kann. Insgesamt ist die Konstruktion dieser Nabe mit einer sternförmigen Geometrie versehen, die durch im Inneren der Schale angeordnete Verrippungen versteift ausgebildet ist. Dadurch soll der Problematik des hohen Gewichts, der hohen Kosten und auch der möglichen Ermüdung der Rotornabe entgegengetreten werden. Soweit bekannt, ist dieser Vorschlag jedoch nicht in die Praxis umgesetzt worden.

Ein weiterer Vorschlag ist aus der DE 101 53 683 C1 bekannt. Hier wird eine Bauweise beschrieben, die die gesamte Rotornabe mit der Antriebswelle in einem Stück aus einem Faserverbundwerkstoff integriert. Die Konstruktion der Rotornabe entspricht der einer metallischen Ausführung.

Dieser Vorschlag wird in der DE 102 14 340 C1 ergänzt, in der ein Blattanschluss für die Rotorblätter einer Windenergieanlage beschrieben wird, bei dem die Rotorblätter und/oder die Rotornabe einen Insert aus einem festen Material aufweisen, welches in die Wurzel des Rotorblattes oder in die Flansche der Rotornabe eingesetzt ist.

Für kleinere Windkraftanlagen wird in der DE 20 2007 004 136 U1 ein Konzept vorgeschlagen, dass geeignet ist, wenn nur geringe Kräfte von Rotorblättern zu übertragen sind. Die Rotorblätter sind mit speziell ausgebildeten, massiven Blattwurzeln ausgestattet, die über zwei Nabenpfannen stirnseitig mittels einer Kegelverbindung verbunden werden. Die Kräfte werden über die Stirnseite der Rotornabe aufgefangen. Das entstehende Drehmoment wird ausschließlich über Reibung übertragen. Dieses Konzept ist für den Einsatz bei größeren Windkraftanlagen nicht geeignet, bei denen größere Kräfte zu übertragen sind.

Eine praktikable Rotornabe in Faserverbundbauweise ist bisher jedoch noch nicht geschaffen worden, trotz der bereits veröffentlichten theoretischen Überlegungen. Ersichtlich fehlt es noch an der Umsetzbarkeit der Vorschläge.

Aufgabe der Erfindung ist es daher, eine Rotornabe vorzuschlagen, die in Faserverbundbauweise aufgebaut ist und die die in der Praxis bisher aufgetretenen Probleme weitmöglichst vermeidet.

Diese Aufgabe wird bei der Erfindung mit einer gattungsgemäßen Rotornabe dadurch gelöst, dass zu jedem einzelnen Rotorblatt ein einzelner Anschlusskörper aus Faserverbundwerkstoff vorgesehen ist, welcher Anschlusskörper mit dem ihm zugeordneten Rotorblatt einerseits und mit der Welle andererseits verbunden ist, und dass die einzelnen Anschlusskörper untereinander nicht direkt verbunden sind.

Mit einer derartigen Konzeption wird die Aufgabe gelöst. Es entsteht eine ausgezeichnete und in die Praxis umsetzbare Rotornabe in Faserverbundbauweise. Darüber hinaus ist die erfindungsgemäße Konstruktion eine optimale, faserverbundgerechte und auch belastungsgerechte Gestaltung einer Rotornabe.

Erfindungsgemäß wird das Biegemoment eines jeden Rotorblattes in Schwenkrichtung um die Rotordrehachse, welches Biegemoment für das Drehmoment verantwortlich ist, von dem erwähnten Anschlusskörper direkt als Kräftepaar in die Welle eingeleitet. Dadurch wird direkt ein Torsionsmoment in der Welle erzeugt. Die Kräfte dieses Kräftepaars werden tangential in die Wand der Welle eingeleitet, so dass lokale Biegungen weitgehend vermieden und hohe strukturelle Steifigkeiten erzeugt werden.

Die einzelnen Anschlusskörper sind hierbei im Gegensatz zu herkömmlichen Bauarten nicht miteinander verbunden, sodass die Rotorblätter untereinander nicht interagieren. Das dynamische Verhalten des gesamten Rotorblattes kann dadurch wesentlich verbessert werden.

Das Biegemoment in Schlagrichtung wird als Querkraft-Kräftepaar von der Welle aufgenommen. Dabei werden die Kräfte ohne Umlenkungen bevorzugt direkt in zwei mit der Welle fest verbundenen Versteifungsspanten eingeleitet. Diese Spanten verteilen die Querkräfte durch Schubflüsse in die Wellenhaut.

Querkräfte in Schwenkrichtung sowie Zentrifugalkräfte werden auf die gleiche Weise von den erwähnten Spanten aufgenommen. Das Torsionsmoment um die Rotorlängsachse wird als Kräftepaar primär von den Spanten aufgenommen und in der Wellenbehäutung in einem Torsionsschub transformiert.

Die definierte Kraftführung ermöglicht eine einfache und optimale Gestaltung der einzelnen Elemente, sodass sich eine Bauweise mit verbesserter Materialeffizienz, Steifigkeit, Robustheit und Kosteneffizienz ergibt.

Knotenelemente, die die Anschlusskörper mit der Welle verbinden und die Kräfte des Biegemomentes in Schwenkrichtung aus jeweils zwei benachbarten Anschlusskörpern in die Welle einleiten, werden dabei vorzugsweise und zweckmäßigerweise in Metall ausgeführt.

Durch die nun vorhandene Flexibilität in der Produktionstechnik, die durch den vollständigen Fortfall von gusstechnischen Anforderungen und Restriktionen möglich wird, lassen sich diese Elemente materialspezifisch optimieren. Dies gilt insbesondere hinsichtlich der hohen Dauerfestigkeitsanforderungen, die für Metalle kritisch sind. Natürlich können Gussteile auch hierfür verwendet werden, dies ist jedoch lediglich noch eine Option, kein verpflichtendes Merkmal mehr.

Betrachtet man sich die erfindungsgemäß entstandene Rotornabe im Vergleich zum Stand der Technik, so ergibt sich auch, warum diese Rotornabe letztlich den bereits vorgeschlagenen theoretischen Konzepten überlegen ist.

Wie sich nämlich herausstellt, sind die bisher in den theoretischen Studien vorgeschlagenen Bauformen offensichtlich zu eng an die bisherigen metallischen Konstruktionen angelehnt. Sie schöpfen damit nicht das Potential der Faserverbundwerkstoffe aus und berücksichtigen auch nicht die Problematik, die Faserverbundwerkstoffe auf der anderen Seite hervorrufen.

Dies führt dazu, dass die an sich durch Faserverbundwerkstoffe mögliche Gewichtsersparnis nicht eintritt oder jedenfalls nicht in dem Maße, wie dies gewünscht ist. Auch die Steifigkeit der Konstruktion entspricht nicht den an sich denkbaren und vorstellbaren Möglichkeiten, sodass bei herkömmlichen Vorschlägen die Bauform mit den Faserverbundwerkstoffen deutliche Nachteile gegenüber einer konventionellen Stahlgussbauweise erhält, was die Akzeptanz natürlich stark reduziert.

Erfindungsgemäß können jedoch die Vorteile weit besser ausgeschöpft werden, sodass die bei nicht optimalen Bauweisen entstehenden Gewichts- und Steifigkeitseinbußen nicht eintreten.

Bei den herkömmlichen Vorschlägen für Rotornaben in Faserverbundbauweise werden die Lasten häufig auf undefinierte Weise ähnlich wie bei herkömmlichen konventionellen metallischen Rotornaben gesammelt. Aus diesem "Lastknoten" wird anschließend ein Drehmoment übertragen. Bei metallischen Rotornaben ist dies auch sinnvoll, denn eine Umlenkung und Vergleichmäßigung oder "Verschmierung" von Lasten funktioniert bei isotropen Werkstoffen wie Metallen sehr gut, die durch gleichmäßige und gleichzeitige gute Steifigkeiten bei Zug, Druck und Schub und auch durch gleichförmige Festigkeiten in alle Richtungen charakterisiert sind.

Genau das ist aber bei Faserverbundwerkstoffen nicht der Fall. Die Eigenschaften von Faserverbundwerkstoffen sind stark richtungsabhängig: ausgezeichnete Eigenschaften eines Faserverbundwerkstoffes in einer Richtung gehen mit wenig befriedigenden Eigenschaften in einer anderen Richtung einher.

Die Erfindung nutzt nun eine gezielte Orientierung der Faserverbundlagen. Genutzt wird ferner der nun klar definierte Kraftverlauf innerhalb der Struktur. Dies spielt eine entscheidende Rolle beim effizienten Einsatz der Faserverbundwerkstoffe in der Erfindung.

Bei einem näheren Vergleich der erfindungsgemäßen Konstruktion mit den bisherigen Vorschlägen erkennt man, warum die bisherigen Rotornaben in Faserverbundbauweise unbefriedigend gewesen sind. Diese sammelten äußere Lasten, um sie dann auf undefinierte Weise an die Rotorwelle abzugeben. Der Kraftverlauf ist auf diese Weise sowohl in der Ebene als auch aus der Ebene durch Lastumleitungen gekennzeichnet. Die aus dem Biegemoment in Schwenkrichtung resultierenden, in Spannweitenrichtung wirkenden Zug- und Drucklasten der Rotorblätter in Bezug auf deren Biegeachse konzentrieren sich in den äußersten Bereichen des Rotorblattquerschnitts. Bei herkömmlichen Rotornaben in Faserverbundbauweisen werden diese von dort aus in den weniger wirksamen Stirnbereichen abgeführt, um dann in die Welle als Drehmoment eingeleitet zu werden.

Diese Lastumleitungen geschehen durch einen sogenannten "In-Plane"-Schub. Die mechanischen Schubeigenschaften von Faserverbundwerkstoffen haben jedoch im Vergleich zu Stahl deutliche Defizite, sodass die Lastumlagerungsbereiche bei diesen herkömmlichen Rotornaben durch zusätzliche schubsteife Lagen verstärkt werden müssen. Das führt dazu, dass die Nabe weitreichende Aufdickungen aufweisen muss, die sich wiederum aus strukturmechanischer und technologischer Sicht nachteilig auswirken. Die Geometrie derartiger herkömmlicher Rotornaben aus Faserverbundwerkstoffen ruft zudem - insbesondere bei der Einleitung der Biegemomentkräfte in Schlagrichtung - eine Biegebelastung im Laminat hervor, die ungünstige Beanspruchungszustände in Dickenrichtung erzeugt und weitere Aufdickungen erfordert.

Als Folge der ungünstigen, einem metallischen Aufbau ähnlichen Gesamtbauweise der bisherigen Rotornaben aus Faserverbundwerkstoffen ergeben sich hohe Strukturmassen bei gleichzeitig hohen Herstellungskosten verglichen mit der vorliegenden Erfindung. Auch die Steifigkeiten der Rotornaben lassen sich mit der Erfindung gegenüber den theoretischen bisherigen Vorschlägen verbessern.

Das erfindungsgemäße Gesamtkonzept der Nabe beruht auf der Faserverbundbauweise. Verglichen mit herkömmlichen Rotornaben in Stahlgussbauweise bei Windkraftanlagen entsteht somit eine ganz erhebliche Gewichtseinsparung. Das Konzept setzt die globale Strukturmechanik der Nabe in dieser Bauweise besonders effektiv um und nutzt gleichzeitig die Vorzüge, die Faserverbundwerkstoffe bieten. Die vorgeschlagene Bauweise verhindert die Akkumulation der entstehenden Lasten in der Nabe. Statt dessen werden die Lasten dort von einer Antriebswelle abgefangen, wo sie vom Rotorblatt heraus wirken.

Auf diese Weise werden Lastumlagerungen vermieden. Die Orientierung der Faserstränge in dem Faserverbund kann daher optimal gestaltet werden. Dies führt zu einer sehr hohen strukturellen Steifigkeit.

Die bevorzugte Ausführungsform der erfindungsgemäßen Rotornabe beruht auf einer differenziellen Bauweise. Die Konstruktion besitzt bevorzugt einen geschlossenen Anschlusskörper aus Faserverbundwerkstoff pro Rotorblatt, eine Faserverbundwelle, zwei Faserverbundspanten und wird ergänzt durch verschiedene metallische Anschlusselemente.

Die Nabe weist bei drei Rotorblättern auch drei geschlossenen Anschlusskörper aus Faserverbundwerkstoff auf. Diese verbinden die Rotorblätter direkt mit der Antriebswelle, so dass sie einen Anschluss zu den Rotorblättern und einen Anschluss zur Welle aufweisen. Die Anschlusskörper sind hierbei nicht direkt miteinander gekoppelt. Die Geometrie der Anschlusskörper ist bevorzugt derart konfiguriert, dass der Anschluss zum Rotorblatt kreisförmig ist (um dort die Drehverstellmechanismen des Rotorblattes unterzubringen und die Verstellung desselbigen zu ermöglichen), der Anschluss zur Welle weist dagegen eine rechteckige Kastenform auf, deren Abmessungen dem Durchmesser des Anschlussbereiches zum Rotorblatt entsprechen. Dies verhindert jegliche Exentrizitäten unnötige Lastumlagerungen, und ermöglicht dabei eine einfache lineare Längsverbindung des Anschlusskörpers zur Welle und eine einfache Querverbindung des Anschlusskörpers zu den Spanten.

Der Durchmesser der Antriebswelle im Rotornabenbereich ist gleich dem Durchmesser beziehungsweise den Kantenabmessungen des projizierten Rechteckquerschnittes des Anschlusskörpers. Dadurch werden die Laminatlasten infolge des Biegemomentes in Schwenkrichtung über die metallischen Knotenelemente tangential und linienförmig in die Welle eingeleitet um dort direkt als Drehmoment zu wirken. Das metallische Knotenelement wirkt hierbei gleichzeitig als Versteifungselement der Welle.

Die zugseitige Verbindung zum Spant kann über eine Scherverbindung mittels eines Metallringes erfolgen; die druckseitige Verbindung kann mit einer Zugbolzenverbindung mittels eines abgewinkelten Ringes erfolgen, da die Lastübertragung primär über Flächenpressung erfolgt. Die Verbindung des Anschlusskörpers zur Wellenhaut geschieht mit metallischen Knotenelementen in X-Form. Diese nehmen die Lasten aus zwei benachbarten Anschlusskörpern auf und leiten sie ohne Umlenkung tangential in die Wellenhaut weiter. Die Verbindung zur Wellenhaut geschieht mittels Bolzen-Scherverbindungen; die Verbindung zu den Anschlusskörpern geschieht vorzugsweise mittels herkömmlicher Zugbolzen.

Die Faserverbundwelle kann mit herkömmlichen Technologien hergestellt werden, vorzugsweise in der Wickeltechnik. Die Welle muss als Torsions- und Biegekörper gestaltet werden. Bei rein axialsymmetrischer Form kann die Welle als "Meterware" produziert werden, was sich günstig auf die Kosteneffizienz der Lösung erweist. Die Anschlusskörper aus Faserverbund können mit herkömmlichen Technologien produziert werden, vorzugsweise in der Infusionstechnik, Wickeltechnik oder Fibre-Placement Technik.

Resultiert der Wellendurchmesser zu groß für die Lagerung im Turm, so wird eine koaxiale Welle vorgesehen, die mit den Stützspanten fest verbunden ist. Das Drehmoment der Nabe wird bei dieser Konfiguration von den Spanten gesammelt, um dann in die koaxiale Welle eingeleitet zu werden. Hier ergibt sich ein geringfügig abweichender Belastungszustand der mit den Anschlusskörpern verbundenen Sekundärwelle im Vergleich zu der Ausführung mit nur einer Welle.

Die drei geschlossenen Anschlusskörper aus Faserverbundwerkstoff können in einem Schuss gefertigt werden. Die Primärwelle und die Sekundärwelle können als "Meterware" produziert werden.

Die metallischen Verbindungselemente **für die Befestigung des** Anschlusskörpers zu den Spanten und zu der Welle können dagegen als einfache ringförmige beziehungsweise als extrudierte Bauteile vorgesehen werden, die mit konventionellen Fertigungstechniken als Massenware produziert werden können.

Auf diese Weise sind die bisherigen aufwendigen Gussbauteile nicht mehr erforderlich. Das führt umgekehrt dazu, dass der für die metallischen Verbindungselemente benutzte metallische Werkstoff hinsichtlich seiner Dauerfestigkeitsanforderungen unabhängig von seinem Fertigungsprozess ausgewählt werden kann.

Im Folgenden werden zwei Ausführungsformen der Erfindung anhand der folgenden Zeichnungen näher erläutert. Es zeigen:
- **Figur 1**: eine schematische Ansicht einer Windkraftanlage mit einem Rotor, einer Rotornabe und drei Rotorblättern;
- **Figur 2**: eine perspektivische Ansicht einer Ausführungsform der erfindungsgemäßen Nabe eines Rotors für eine Windkraftanlage;
- **Figur 3**: eine Explosionsdarstellung der Ausführungsform aus Figur 2;
- **Figur 4a**: ein Element der Ausführungsform aus den Figuren 2 und 3 in perspektivischer Darstellung;
- **Figur 4b**: eine Draufsicht des Elements aus Figur 4a gesehen in Richtung der Rotorblattachse;
- **Figur 4c**: eine Draufsicht des Elements aus Figur 4a inklusive einer Welle in Richtung der Rotorblattachse;
- **Figur 5a**: einen Schnitt durch die Darstellung aus Figur 2;
- **Figur 5b**: einen Schnitt durch die Darstellung aus Figur 2 einschließlich eines Zusatzelementes;
- **Figur 6**: eine vergrößerte Darstellung eines Ausschnitts aus Figur 5;
- **Figur 7**: eine Schnittansicht in der Rotationsebene der erfindungsgemäßen Ausführungsform aus der Figur 2 um den Verbindungsbereich des Knotenelementes;

- **Figur 8**: eine Schnittansicht senkrecht zur Rotationsebene der erfindungsgemäßen Ausführungsform aus der Figur 2 um den Verbindungsbereich eines Anschlusskörpers zu den Spanten;
- **Figur 9**: eine Explosionsdarstellung einer alternativen Ausführungsform der Erfindung;
- **Figur 10**: einen Schnitt durch die Darstellung in Figur 9;
- **Figur 11**: eine vergrößerte Darstellung eines Details aus der Figur 10; und
- **Figur 12**: eine Darstellung der verwendeten Sekundärwelle.

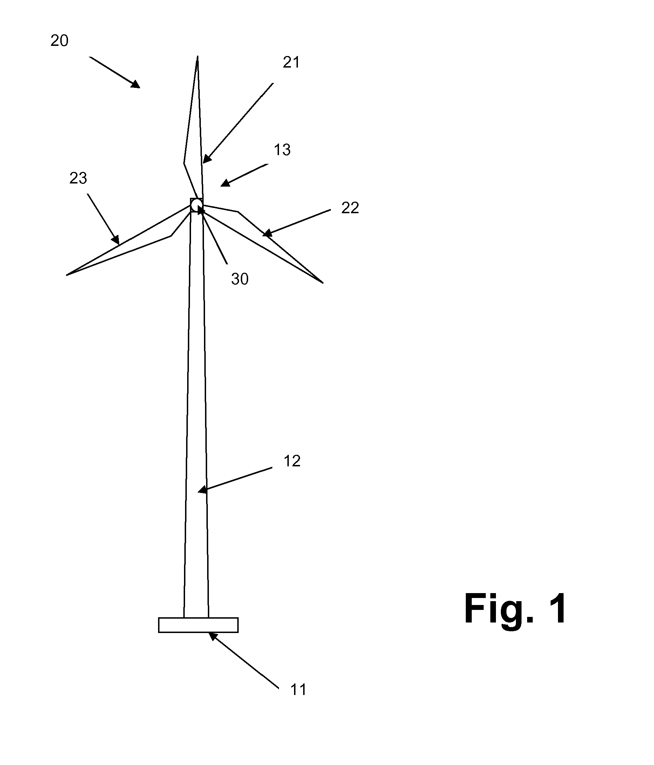

In der **Figur 1** ist eine Windenergieanlage rein schematisch dargestellt. Auf einem Erdboden 11 steht ein Turm 12. An dem Turm 12 ist eine Gondel 13 zur Aufnahme eines Generators angeordnet. Die Gondel 13 liegt in der Darstellung in der Figur 1 hinter der Blattebene und trägt einen Rotor 20.

Der Rotor 20 besitzt eine Rotornabe 30 sowie beispielsweise und bevorzugt drei Rotorblätter 21, 22 und 23. Auf die Rotorblätter 21, 22, 23 wirken Windkräfte, die auf die Rotornabe 30 übertragen werden und diese in Drehung versetzen. Die Drehung erfolgt um eine im Wesentlichen horizontale Achse. Die horizontale Achse ist auch die Achse einer ebenfalls horizontal laufenden Welle, die in der Figur 1 senkrecht zur Blattebene steht. Diese Welle ragt von der Rotornabe 30 aus in das Innere der Gondel 13, in der Darstellung der Figur 1 also nach hinten. Die Rotornabe 30 treibt dann über diese Welle den Generator (nicht dargestellt) in der Gondel 13 an.

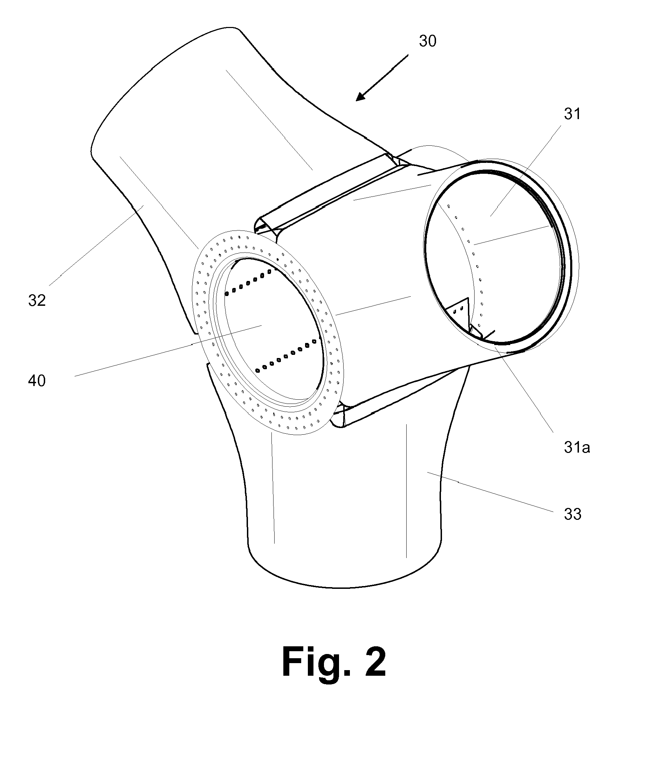

In der **Figur 2** ist eine Gesamtansicht einer Rotornabe 30 dargestellt, wie sie in der Konzeption aus der Figur 1 eingesetzt werden könnte. Man sieht, dass die Rotornabe 30 einerseits mit der bereits erwähnten Welle und andererseits mit den drei Rotorblättern 21, 22 und 23 zu verbinden ist. In der Figur 2 ist nur ein Ausschnitt der dünnwandigen Welle dargestellt, der in unmittelbarer Umgebung zur Rotornabe angeordnet ist. Eine Verlängerung dieses dargestellten Abschnitts zum Generator hin führt in die Gondel 13 hinein und wird dort entsprechend gelagert.

Die drei Rotorblätter sind in der Figur 2 dagegen nicht dargestellt.

Dabei sieht man drei Anschlusskörper 31, 32 und 33 für die drei Rotorblätter 21, 22 und 23. Jeder dieser drei Anschlusskörper 31, 32 und 33 besitzt einen Anschlussbereich 31 a, 32a und 33a; der jeweils kreisförmig ausgebildet ist und an dem jeweils eines der Rotorblätter 21, 22 und 23 befestigt werden kann. Dies ist besonders gut für das nach schräg rechts oben ragende Rotorblatt 21 beziehungsweise für dessen Anschlusskörper 31 und dessen Anschlussbereich 31 a zu erkennen. Dieser Anschlussbereich 31 a ist passend kreisförmig für den Anschluss des Rotorblattes 21 ausgebildet.

Auf diese Weise wird es besonders vereinfacht, die Drehverstellmechanismen für die Rotorblätter unterzubringen und damit die Verstellung dieser Rotorblätter auf konventionelle Art und Weise zu ermöglichen.

Die perspektivische Darstellung in der Figur 2 lässt den Anschlusskörper 32 für das zweite Rotorblatt 22 schräg nach links oben ragen, den Anschlusskörper 33 für das dritte Rotorblatt 23 nach unten.

Die bereits erwähnte dünnwandige Welle 40 ragt in dieser perspektivischen Darstellung von links vorn nach rechts hinten durch die Rotornabe 30. Die Fortführung der Welle 40 ist nicht dargestellt und wird in der Gondel 13 (vergleiche Figur 1) gelagert. Die Welle 40 dreht sich mit den Anschlusskörpern 31 , 32 und 33 des Rotors 30 und den daran angeschlossenen Rotorblättern 21, 22 und 23 um die eigene, in der Praxis horizontal verlaufende Achse.

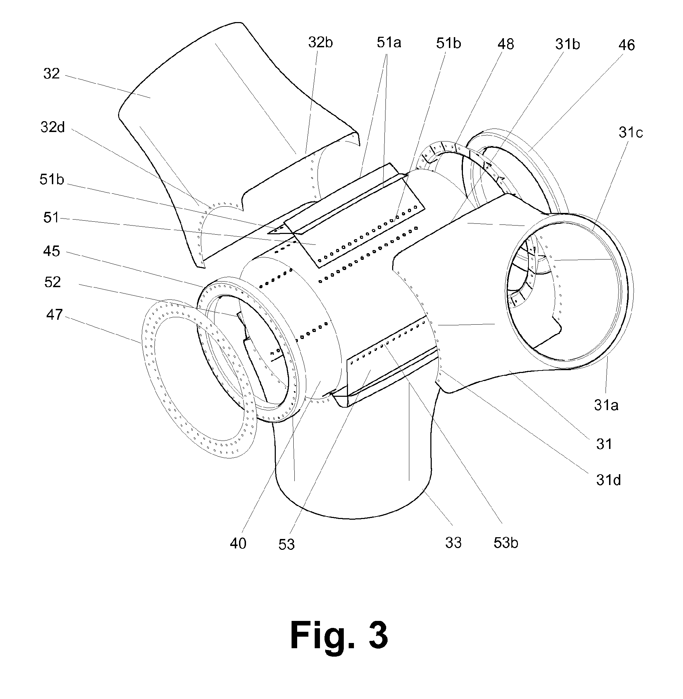

In der **Figur 3** ist nun eine Explosionsdarstellung der Rotornabe 30 aus der Figur 2 zu erkennen. Die Anschlusskörper 31, 32 und 33 bestehen ebenso wie die Welle 40 aus Faserverbundwerkstoff. Sie sind an der Welle 40 mittels bevorzugt metallischer und im Querschnitt X-förmiger Verbindungselemente 51, 52 und 53 befestigt.

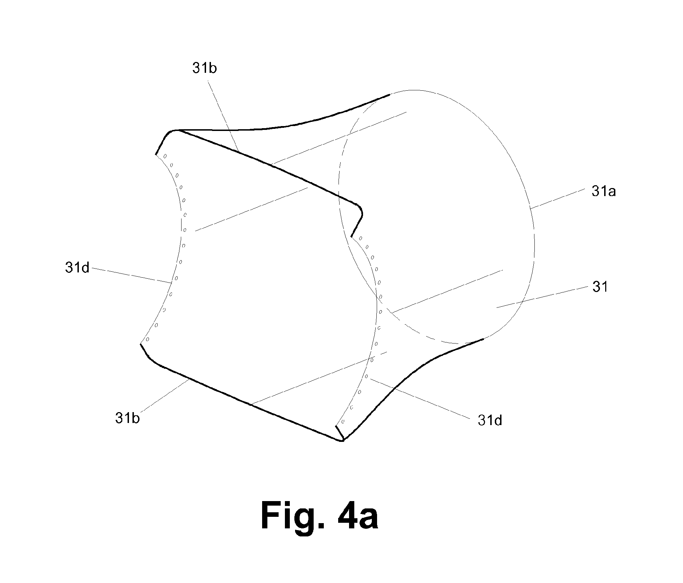

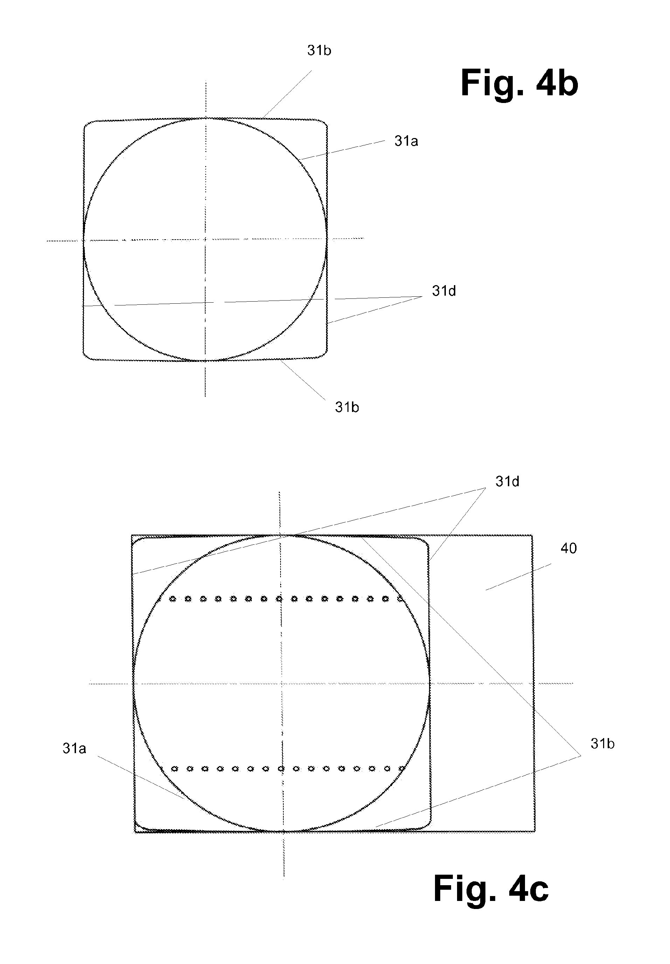

Aufgrund der Explosionsdarstellung sieht man die von dem kreisförmigen Anschlussbereich 31 a, 32a, 33a abgewandte Seite der Anschlusskörper 31, 32, 33 mit Anschlussbereichen 31 b, 32b und 33b und 31 d, 32d und 33d. Diese Anschlussbereiche sind nicht kreisförmig, sondern in ihrer Grundform quadratisch und auch dreidimensional ausgebildet, wie noch in Zusammenhang mit Figur 4 weiter näher erläutert wird.

Der Anschlussbereich 31 b, 32b und 33b dient zum Anschluss der Anschlusskörper an der Welle 40 über die Verbindungselemente 51, 52 beziehungsweise 53.

Vorgesehen sind darüber hinaus ein Vorderspant 45 und ein Hinterspant 46. Die Anschlusskörper 31, 32 und 33 sind am Vorderspant und am Hinterspant 46 an den kreisschnittförmigen Verbindungsbereichen 31d, 32d und 33d über Anschlussringe 47 für den Vorderspant 45 beziehungsweise 48 für den Hinterspant 46 verbunden.

Die metallischen Verbindungselemente 51 , 52 und 53 sind mit den Anschlusskörpern 31, 32 und 33 und deren Anschlussbereich 31 b, 32b und 33b über eigene Anschlussbereiche 51 a, 52a und 53a verbunden. Eine Verbindung mit der Faserverbundwelle 40 erfolgt mechanisch über einen weiteren Anschlussbereich 51 b beziehungsweise 52b und 53b.

Die Anschlusskörper 31, 32, 33 weisen ihrerseits einen Versteifungsspant 31 c, 32c, 33c im Anschlussbereich 31 a, 32a, 33a zu den Rotorblättern 21, 22, 23 auf.

Es sei darauf hingewiesen, dass zur Verdeutlichung nicht alle Bezugszeichen jeweils auch in jeder Figur eingezeichnet sind; sie sind jedoch zur Verdeutlichung des Gesamtzusammenhangs durchgehend in der Beschreibung verwendet worden.

In der **Figur 4a** ist ein Anschlusskörper separat herausgezeichnet worden. Die drei Anschlusskörper 31, 32 und 33 sind identisch und zeichnen sich lediglich durch ihre unterschiedliche Lage um die Welle 40 aus. Daher sei hier der Einfachheit halber die Beschreibung zum Anschlusskörper 31 gegeben. Dabei ist hier die zum Rotorblatt 21 gerichtete Seite mit dem Anschlussbereich 31 a vom Betrachter abgewandt, dagegen die zur Welle 40 gerichtete Seite mit dem Anschlussbereich 31 b dem Betrachter zugewandt. Man sieht hier verdeutlicht, dass der Anschlussbereich 31a zum Rotorblatt 21 im Wesentlichen kreisförmig und rund ist; die Verbindung zur Welle, bestehend aus dem geradlinigen Anschlussbereich 31 b senkrecht zur durch die Kreismitte des Anschlussbereiches 31a führenden Achse des Rotorblattes 21 und den kreisschnittförmigen, ebenen Anschlussbereichen 31 d, ist dagegen in ihrem Grundaufbau rechteckig, bevorzugt sogar quadratisch.

Man sieht mithin, dass der Anschlusskörper 31 einen kreisförmigen Anschlussbereich 31a zum Rotorblatt 21, einen linienförmigen Anschlussbereich 31 b zur Welle 40 beziehungsweise zu den metallischen, X-förmigen Verbindungselementen 51, 52, 53 und schließlich kreisförmige, jedoch ebenfalls ebene Anschlussbereiche 31 d zu den in der Welle 40 integrierten Vorder- und Hinterspanten 45 und 46 aufweist.

In der **Figur 4b** ist der Anschlusskörper aus Figur 4a in Richtung der Rotorblattlängsachse gesehen dargestellt. Man erkennt hier den kreisförmigen Anschlussbereich 31a und den quadratischen Grundquerschnitt mit den Anschlussbereichen 31b und 31 d. Man kann daraus entnehmen, dass die Kantenlängen des quadratischen Grundquerschnittes vorzugsweise und auch zweckmäßigerweise dem Durchmesser des kreisförmigen Anschlussbereiches entsprechen.

In der **Figur 4c** ist der Anschlusskörper aus der Figur 4a in der Perspektive aus der Figur 4b dargestellt, in diesem Falle einschließlich der Rotorwelle 40. Man erkennt, dass die Katenlängen des projizierten Grundquerschnittes des aus den Anschlüssen 31b und 31d gebildeten quadratischen Anschlussbereiches vorzugsweise und auch zweckmäßigerweise den Durchmesser der Rotorwelle 40 entsprechen.

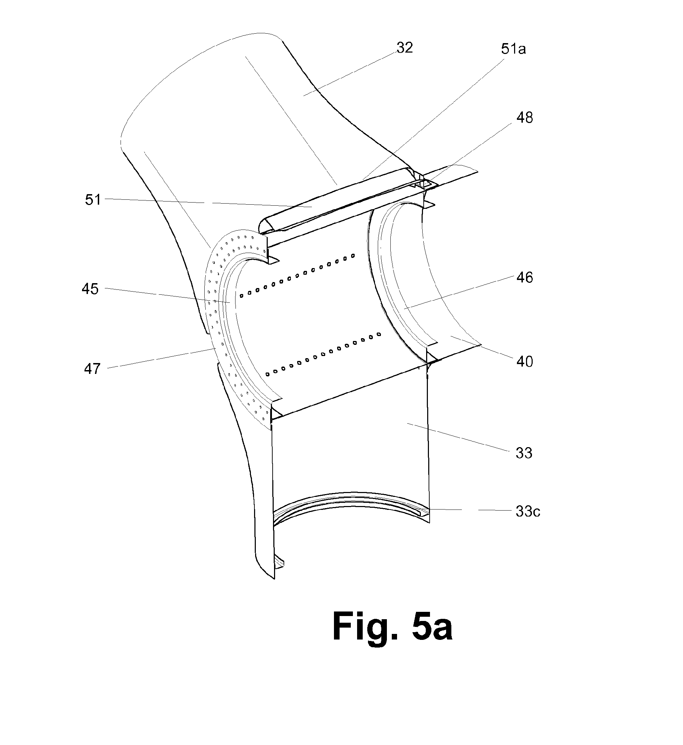

In der **Figur 5a** ist die Gesamtbauweise im Schnitt dargestellt. Der Schnitt ist in etwa senkrecht durch die Darstellungen aus den Figuren 2 oder 3 gelegt, sodass man auf die linke Seite der Rotornabe 30 blickt, und zwar in nicht explodierter Darstellung.

Man sieht also den Anschlusskörper 32 links oben weitgehend vollständig mit seinem Anschlussbereich 32b und insbesondere dem auf den Betrachter zugewandten kreisförmigen Ausschnitt 32d. Auch der Vorderspant 45 und der Hinterspant 46 mit ihren Anschlussringen 47 beziehungsweise 48 sind hier in geschnittener Form gut sichtbar. Die Verbindung zum Vorderspant 45 ist eine reine Zug-Scher-Verbindung. Der hintere Spantanschluss ist druckbelastet und kann mit einer Zugbolzenverbindung mit entsprechender Versteifung realisiert werden. Der Vorderspant 45 und der Hinterspant 46 sind beide in der Welle 40 integriert. Sie können beispielsweise Co-ausgehärtet, verklebt oder mechanisch verbunden sein. Der Vorderspant 45 und der Hinterspant 46 verteilen die Querkräfte des aus dem Biegemoment in Schlagrichtung des Rotorblattes 22 entstehenden Kräftepaares als Schubfluss in die Haut der Welle 40.

Zu erkennen sind außerdem noch das Verbindungselement 51 mit seinem Anschlussbereich 51 a oben sowie der Versteifungsspant 33c ganz unten.

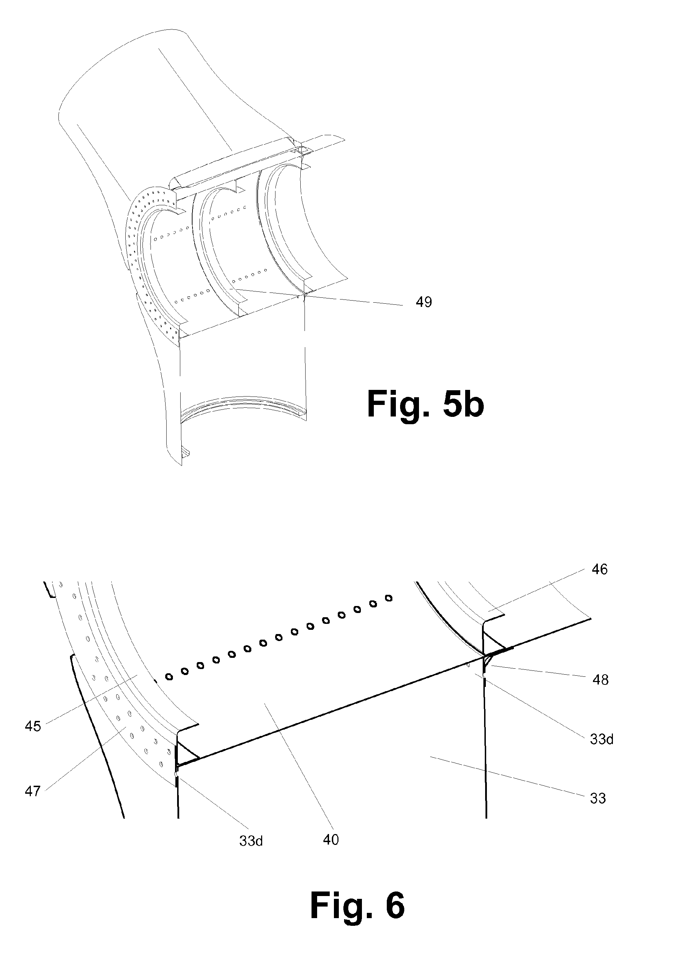

**Figur 5b** zeigt die Implementierung eines Zwischenspants 49 zwischen dem Vorderspant 45 und dem Hinterspant 46. Sofern erforderlich oder gewünscht, können auch mehrere Zwischenspanten 49 vorgesehen werden. Der oder die Zwischenspanten 49 berücksichtigen die Konzentration der Kräfte im mittleren Bereich der Anschlüsse 31 b, 32b beziehungsweise 33b.

**Figur 6** zeigt eine Detailansicht der Region, die den Anschlussbereich 33b des unteren Anschlusskörpers 33 zur Welle 40 bildet. Man sieht insbesondere die kreisförmigen Anschlussbereiche 33d des Anschlusskörpers 33 zu den Spanten 45 und 46 mit deren Anschlussringen 47 und 48.

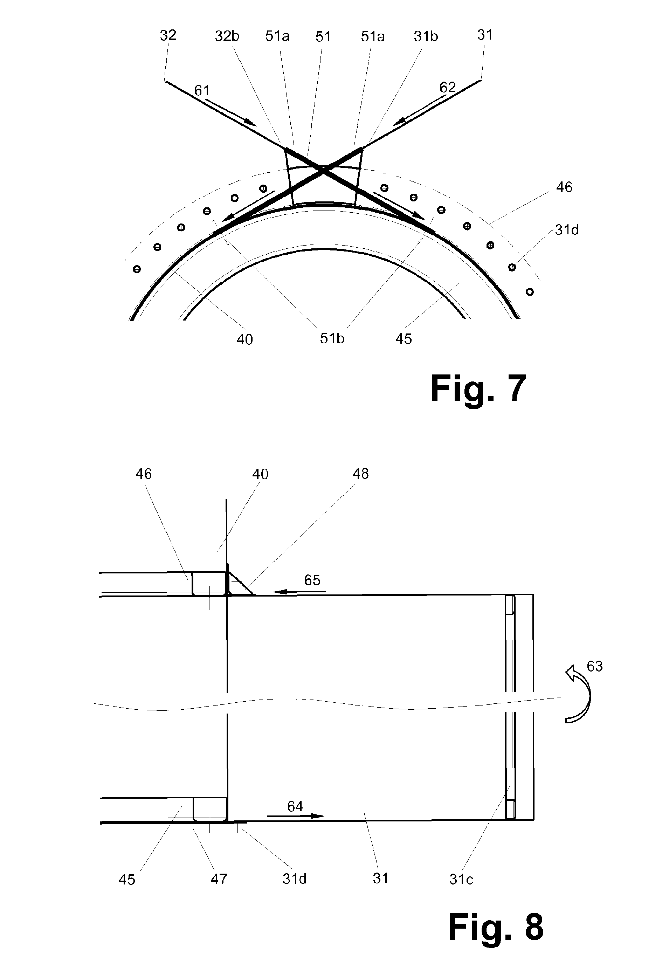

In der **Figur 7** ist die Verbindung der Anschlusskörper 31, 32, 33 zur Welle 40 über die X-förmigen metallischen Verbindungselemente 51, 52, 53 näher erläutert. Der Anschlussbereich 31 b, 32b, 33b der Faserverbund-Anschlussköper 31, 32, 33 ist mit dem Verbindungsbereich 51a, 52a, 53a des metallischen Verbindungselementes 51, 52, 53 mechanisch verbunden. Diese Verbindung ist nicht genauer spezifiziert. Es kann hier bevorzugt eine konventionelle Verbindung mittels Zugbolzen verwendet werden. Dadurch wird eine toleranzgerechte Montage ermöglicht.

Die metallischen Verbindungselemente 51, 52, 53 sind mit der Welle 40 über eine lineare Verbindung 51 b, 52b, 53b gekoppelt. Dafür kann beispielsweise eine einreihige, einschnittige Bolzenverbindung gewählt werden. Wie man erkennt, werden die aus dem Biegemoment in Schwenkrichtung resultierenden Drucklasten (siehe Pfeil 61) eines Anschlusskörpers beziehungsweise die Zuglasten (siehe Pfeil 52) des benachbarten Anschlusskörpers tangential in die Haut der Welle 40 eingeleitet.

Die **Figur 8** zeigt die Kopplung eines der drei Anschlusskörper 31 zur Welle 40. Man sieht, dass die aus dem Biegemoment (siehe Pfeil 63) in Schlagrichtung resultierenden Zuglasten (siehe Pfeil 64) und Drucklasten (siehe Pfeil 65) direkt von dem Vorderspant 45 und dem Hinterspant 46 abgefangen werden. Sie werden dann in Schubflüsse der Haut der Welle 40 umgewandelt.

Die Zugseite ist im Verbindungsbereich 31 d mit dem Verbindungsring 47 am Steg des Vorderspantes 45 über eine mechanische Scherverbindung gekoppelt. Die Druckscheite ist dagegen über einen abgewinkelten Verbindungsring 48 mit entsprechenden Versteifungen mit dem Hinterspant 46 mechanisch verbunden. Die Drucklasten werden hier primär über Flächenpressung abgefangen.

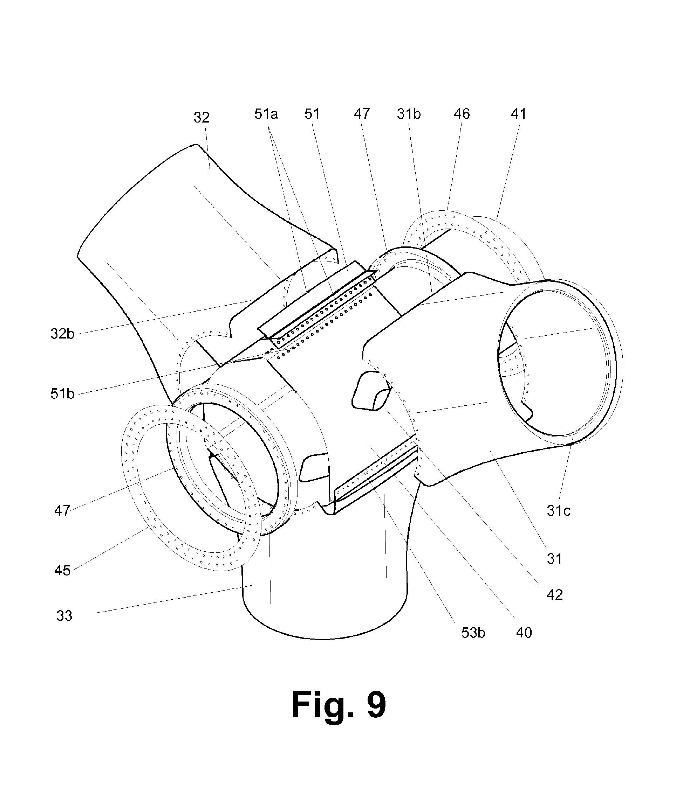

In der **Figur 9** ist eine alternative Ausführungsform der Erfindung dargestellt. Die Welle 40 ist hier wie der Anschlussbereich 51 b der metallischen Verbindungselemente 51, 52, 53 nicht rein zylindrisch, sondern derart geformt, dass die metallischen Verbindungselemente 51, 52, 53 kleiner ausgeführt werden können. Wird dann konstruktiv ein kleinerer Durchmesser der Welle 40 verlangt, so kann eine kleinere zylindrische koaxiale Hauptwelle 41 vorgesehen werden, die mit inneren Spantgurten fest fixiert ist. Die Welle 40 wird dadurch zu einer Sekundärwelle und übernimmt dann die Funktion, die Lasten aus der Biegung in Schwenkrichtung aufzunehmen und über Schub in die Spanten 45, 46 einzuleiten.

Auch hierfür können, sofern gewünscht oder erforderlich, Zwischenspanten vorgesehen werden.

Der Spantinnendurchmesser kann daher an den geforderten Durchmesser Hauptwelle 41 angepasst werden. Sowohl die Hauptwelle 41 als auch die Sekundärwelle 40 können als Meterware durch Wickeltechnik günstig produziert werden. Die Verbindungen der Anschlusskörper 31, 32, 33 vom Vorderspant 45 und vom Hinterspant 46 können identisch mit einfachen Anschlussringen 47 und 48 ausgeführt werden.

Zusätzlich können Zugangslöcher 42 in der Welle 40 vorgesehen werden.

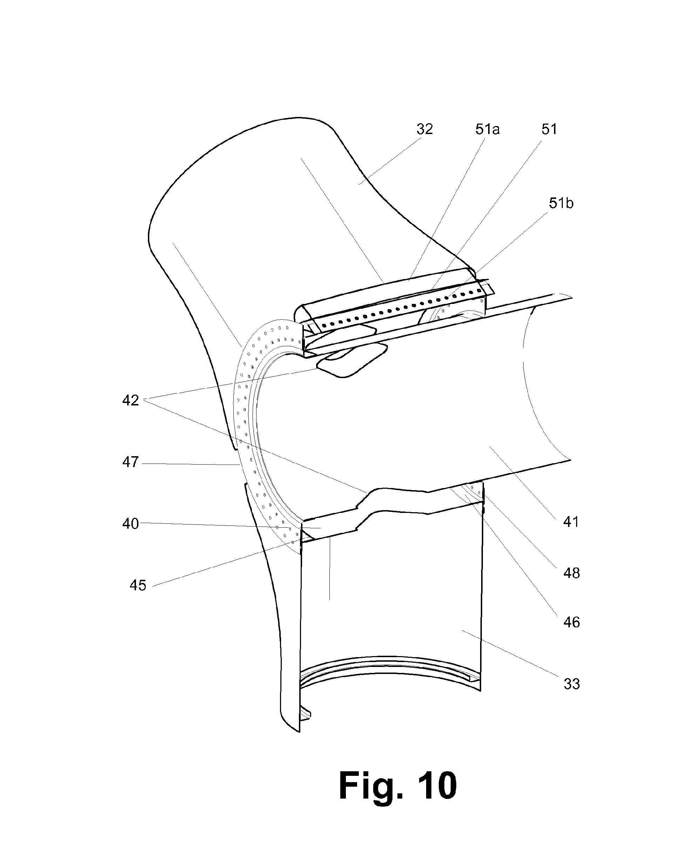

In der **Figur 10** ist eine Schnittdarstellung gezeigt, die im Aufbau der Figur 5 entspricht, jedoch die Ausführungsform aus der Figur 9 im Schnitt darstellt. Man sieht wiederum den Anschlusskörper 32 vollständig links oben und den Anschlusskörper 33 halb geschnitten unten. Der Vorderspant 45 wird durch einen Anschlussring 47 und der Hinterspant 46 durch einen Anschlussring 48 gehalten. Beide Anschlussringe sind bevorzugt identisch.

Die Welle besteht auch hier wiederum aus zwei koaxial zueinander ausgeführten Teilwellen, nämlich aus einer Hauptwelle 41 und einer Sekundärwelle 40. Die beiden Wellen 40, 41 sind über die Vorderspannte 45 und Hinterspante 46 miteinander verbunden. Die Fügung der Anschlusskörper 32 und 33 geschieht im Anschlussbereich 31 e über die Anschlussringe 47, 48.

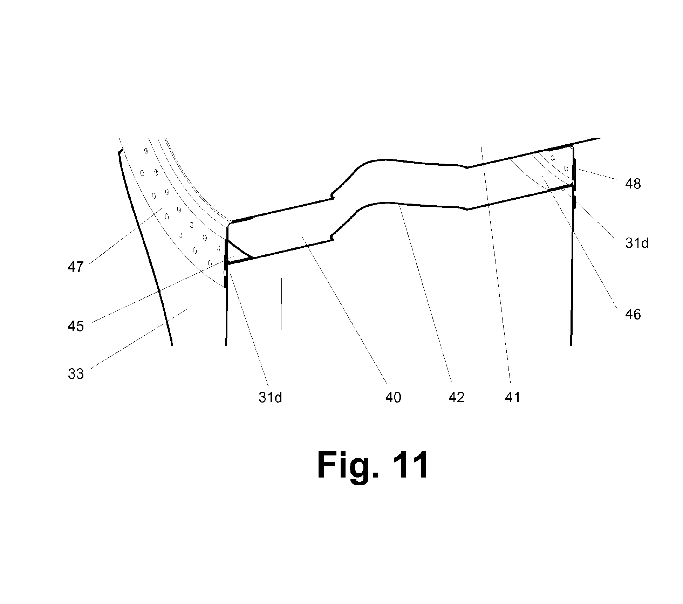

In der **Figur 11** sieht man ähnlich wie in der Figur 6 eine vergrößerte Darstellung eines Details, hier jedoch aus der Ausführungsform in der Figur 10. Dementsprechend sieht man noch größer die beiden Wellen 40 und 41 und eine schematische Darstellung eines Zugangsloches 42 für Montage und Wartung. Gut zu erkennen ist auch, dass die Anschlussringe 47 und 48 die beiden Wellen 40 und 41 und die Spanten 45 und 46 verbinden.

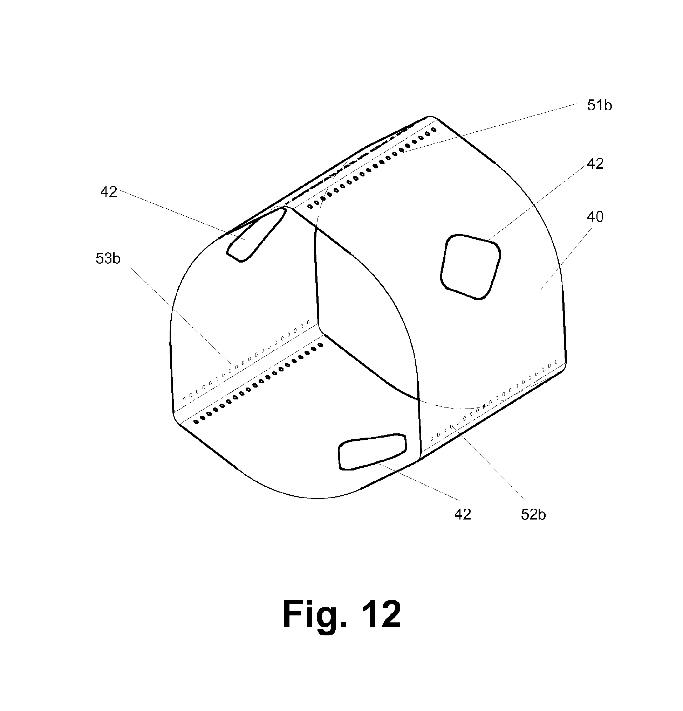

In der **Figur 12** ist die Sekundärwelle 40 dieser Ausführungsform in ihrer speziellen Form nochmals vergrößert dargestellt. Sie ermöglicht eine optimale Anbindung an den Verbindungsbereich 51 b, 52b, 53b der metallischen Verbindungselemente 51, 52, 53. Zu sehen sind auch hier die Ausschnitte beziehungsweise Zugangslöcher 42 für Montage und Wartung.

### Bezugszeichenliste

- 11: Erdboden
- 12: Turm
- 13: Gondel

- 20: Rotor
- 21: Rotorblatt
- 22: Rotorblatt
- 23: Rotorblatt

- 30: Rotornabe
- 31: Anschlusskörper
- 31 a: Anschlussbereich zum Rotorblatt 21
- 31 b: Anschlussbereich zum Verbindungselement 51 beziehungsweise 33
- 31 c: Versteifungsspant
- 31 d: Anschlussbereich zu den Spanten 45 beziehungsweise 46
- 32: Anschlusskörper
- 32a: Anschlussbereich zum Rotorblatt 22
- 32b: Anschlussbereich zum Verbindungselement 51 beziehungsweise 52
- 32c: Versteifungsspant
- 32d: Anschlussbereich zu den Spanten 45 beziehungsweise 46
- 33: Anschlusskörper
- 33a: Anschlussbereich zum Rotorblatt 23
- 33b: Anschlussbereich zum Verbindungselement 52 beziehungsweise 53

- 33c: Versteifungsspant
- 33d: Anschlussbereich zu den Spanten 45 beziehungsweise 46

- 40: Welle beziehungsweise Sekundärwelle
- 41: Hauptwelle
- 42: Zugangsloch
- 45: Vorderspant
- 46: Hinterspant
- 47: Anschlussring vom Anschlusskörper am Vorderspant
- 48: Anschlussring für den Anschlusskörper am Hinterspant
- 49: Zwischenspant

- 51: Verbindungselement
- 51 a: Anschlussbereich des Verbindungselements zum Anschlusskörper
- 51 b: lineare Verbindung des Verbindungselementes 51 zur Welle
- 52: Verbindungselement
- 52a: Anschlussbereich des Verbindungselements zum Anschlusskörper
- 52b: lineare Verbindung des Verbindungselementes 52 zur Welle
- 53: Verbindungselement
- 53a: Anschlussbereich des Verbindungselements zum Anschlusskörper
- 53b: lineare Verbindung des Verbindungselementes 53 zur Welle

- 61: Pfeil für Drucklast
- 62: Pfeil für Zuglast
- 63: Pfeil für Biegemoment
- 64: Pfeil für Zuglast
- 65: Pfeil für Drucklast

## Patentansprüche

1. Rotornabe (30) für Windkraftanlagen,
mit einer drehbaren Welle (40, 41) aus Faserverbundwerkstoff,
mit mehreren Rotorblättern (21, 22, 23), und
mit einer mittelbaren Verbindung der Welle (40, 41) zu den Rotorblättern (21, 22, 23),
**dadurch gekennzeichnet,**
**dass** zu jedem einzelnen Rotorblatt (21, 22, 23) ein einzelner Anschlusskörper (31, 32, 33) aus Faserverbundwerkstoff vorgesehen ist, welcher Anschlusskörper mit dem ihm zugeordneten Rotorblatt einerseits und mit der Welle (40, 41) andererseits verbunden ist, und
**dass** die einzelnen Anschlusskörper (31, 32, 33) untereinander nicht direkt verbunden sind.

2. Rotornabe (30) nach Anspruch 1,
**dadurch gekennzeichnet,**
**dass** jeder der Anschlusskörper (31, 32, 33) einen Anschlussbereich (31 a, 32a, 33a) zu dem ihm zugeordneten Rotorblatt (21, 22, 23) aufweist und
**dass** dieser Anschlussbereich kreisförmig ist, wobei der Kreis senkrecht zur Achse des Rotorblattes steht.

3. Rotornabe (30) nach Anspruch 1 oder 2,
**dadurch gekennzeichnet,**
**dass** jeder Anschlusskörper (31, 32, 33) einen Anschlussbereich (31 b, 32b, 33b) zur Welle (40, 41) aufweist, und
**dass** dieser Anschlussbereich (31 b, 32b, 33b) zur Welle (40) eine rechteckige Grundform gesehen in Richtung der Rotorblattachse des zugehörigen Rotorblattes aufweist, insbesondere eine quadratische Grundform.

4. Rotornabe (30) nach Anspruch 3,
**dadurch gekennzeichnet,**
**dass** die in Richtung der Rotorblattachse gesehene rechteckige projizierte Grundform des Anschlussbereichs (31 b, 32b, 33b) zur Welle (40) Kantenlängen besitzt, die dem Durchmesser der angekoppelten Welle (40) entsprechen.

5. Rotornabe (30) nach Anspruch 3 und 4,
**dadurch gekennzeichnet,**
**dass** die Kantenlängen des projizierten, aus den Anschlussbereichen zur Welle (31b), 32b, 33b, 31d, 32d, 33d) gebildeten Rechteckes dem Durchmesser des kreisförmigen Anschlussbereiches (31a, 32a, 33a) des Anschlusskörpers (31, 32, 33) zum Rotorblatt (21, 22, 23) entsprechen.

6. Rotornabe (30) nach einem der vorstehenden Ansprüche,
**dadurch gekennzeichnet,**
**dass** der Anschlussbereich (31 b, 32b, 33b) der Anschlusskörper (31, 32, 33) mit der Faserverbundwelle (40, 41) mittels eines metallischen Verbindungselementes (51, 52, 53) mit insbesondere X-förmigem Querschnitt verbunden ist.

7. Rotornabe (30) nach einem der vorstehenden Ansprüche,
**dadurch gekennzeichnet,**
**dass** der rechteckige Anschlussbereich (31 b, 32b, 33b) des Anschlusskörpers (31, 32, 33) direkt mit mindestens einem mit der Welle (40, 41) fest verbundenen Versteifungsspant (45, 46) verbunden ist.

8. Rotornabe (30) nach einem der vorstehenden Ansprüche,
**dadurch gekennzeichnet,**
**dass** die Anschlusskörper (31, 32, 33) mit den Spanten (45, 46) mittels Abschlussringen (47, 48) verbunden sind.

9. Rotornabe (30) nach einem der vorstehenden Ansprüche,
**dadurch gekennzeichnet,**
**dass** die Welle (40, 41) aus einer Hauptwelle (41) und einer Sekundärwelle (40) aufgebaut ist, die beide aus Faserverbundwerkstoff bestehen und koaxial zueinander angeordnet sind,
**dass** die Anschlusskörper (31, 32, 33) an der Sekundärwelle (40) fixiert sind, und
**dass** die beiden Wellen (40, 41) über mindestens einen Stützspant verbunden sind.

10. Rotornabe (30) nach Anspruch 9,
**dadurch gekennzeichnet,**
**dass** die mit den Anschlusskörpern (31, 32, 33) verbundene Welle (40, 41) eine im Verbindungsbereich zu den Anschlusskörpern (31, 32, 33) von der Kreisform abweichende Kontur aufweist.
